(19) Europäisches Patentamt
European Patent Office
Office européen des brevets

(11) Publication number : 0 340 931 B1

# (12) EUROPEAN PATENT SPECIFICATION

(45) Date of publication of patent specification : **03.03.93 Bulletin 93/09**

(51) Int. Cl.$^5$ : **C08K 13/02,** C08K 5/10, C08K 3/36, C08K 3/26, C08L 59/02

(21) Application number : **89303721.8**

(22) Date of filing : **14.04.89**

## (54) Polyacetal resin composition for sliding member, and guide roller or guide pole made by using the same.

(30) Priority : **15.04.88 JP 92869/88**

(43) Date of publication of application : **08.11.89 Bulletin 89/45**

(45) Publication of the grant of the patent : **03.03.93 Bulletin 93/09**

(84) Designated Contracting States : **AT BE CH DE ES FR GB GR IT LI LU NL SE**

(56) References cited :
**EP-A- 0 110 108**
**EP-A- 0 169 721**
**DE-A- 3 404 765**
**FR-A- 2 152 590**
**US-A- 4 274 986**
**Patent Abstracts of Japan, vol. 9, no. 247 (C-307) (1970) October 3, 1985 & JP-A-60-104152**

(73) Proprietor : **POLYPLASTICS CO. LTD.**
**3-13, Azuchi-machi 2-chome**
**Chuo-Ku Osaka-shi (JP)**

(72) Inventor : **Endo, Toshihiko**
**324, Miyashita**
**Fuji-shi Shizuoka (JP)**
Inventor : **Kanoto, Osamu**
**885-11, Miyajima**
**Fuji-shi Shizuoka (JP)**
Inventor : **Matsunaga, Nobujuki**
**104, Kamiyokowari**
**Fuji-shi Shizuoka (JP)**
Inventor : **Fukui, Kiichiro**
**1427-31, Atsuhara**
**Fuji-shi Shizuoka (JP)**
Inventor : **Suzuki, Masajuki**
**7-5-4, Fujimidai**
**Fuji-shi Shizuoka (JP)**

(74) Representative : **Jackson, Peter et al**
**HYDE, HEIDE & O'DONNELL 10-12 Priests Bridge**
**London SW15 5JE (GB)**

EP 0 340 931 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a polyacetal resin composition for a sliding member comprising an inorganic powder and a fatty acid ester, and further relates to a guide roller or a guide pole made of said composition and used for the run of a tape, e.g., a magnetic tape of VTR, 8 mm video, etc. (hereinafter referred to simply as the "tape").

[Prior Art ]

A polyacetal resin has been widely used in the field of sliding parts for automobiles, electrical and electronic appliances because of its balanced mechanical properties and excellent wear and abrasion resistance, chemical resistance, heat resistance, electrical characteristics, etc. However, there is an ever-increasing demand for satisfying more and more strict requirements for characteristics. One of such requirements is to further improve the sliding characteristics and to maintain the same for a long period of time. Representative examples of the sliding parts required to further improve the sliding characteristics include a guide roller, a guide pole, etc. for use in a tape running system of VTR, 8 mm video, etc.

A polyacetal resin has been mainly used in the art as a material for a guide roller etc. However, a recent trend in the guide roller etc. is that, with an increase in the running speed of a tape, it has become difficult for the conventional polyacetal resin to simultaneously satisfy various performance requirements with respect to sliding characteristics such as an increase in the torque, fusion of the frictional surface, and occurrence of creaks caused during the use for a long period of time.

Specifically, in order to improve the above-described sliding characteristics of polyacetal, proposals have been made on the addition of other resins such as a fluororesin, a polyolefin resin, or a silicone resin; incorporation of a solid lubricant such as graphite or molybdenum disulfide; and addition of a fatty acid, a fatty acid ester, a silicone oil, or various mineral oils. However, the sliding member, such as a guide roller, is required to have excellent dimensional accuracy besides sliding characteristics and, if necessary, subjected to machining. In this respect, the incorporation of other resins, such as the above-described fluororesin or polyolefin resin, is likely to cause occurrence of burrs and fuzz on the sliding surface, so that there occurs fluctuation of the torque and abrasion. The addition of well-known lubricants cause the lubricants to ooze out on the surface of the resin particularly at a high temperature, so that the resin suffers poor grasp by a screw and insufficient plasticization in the molding and, in an extreme case, it becomes impossible to conduct molding. Even if the molding could be successfully conducted, the oil oozes out on the surface of the molded article, which renders the molded article entirely unsuitable for use as parts for tape running. Further, although conventional methods of improving the sliding characteristics may enable the molded article to temporarily exhibit very excellent sliding characteristics, the use of the molded article for a long period of time brings about a change in the sliding surface, so that there often occurs a problem such as an increase in the torque.

As described above, it was very difficult in the method known in the art to prepare a resin composition for a sliding member having excellent fabricability, excellent short-term and long-term sliding characteristics, and excellent machinability, particularly a sliding member, such as a guide roller or a guide pole for VTR, 8 mm video or the like, having balanced sliding characteristics, i.e., having excellent wear and abrasion resistance with respect to the sliding on a metallic shaft or a high-speed tape, exhibiting even in a long-term use an excellent effect such as a change in the frictional surface due to the fusion thereof, an increase in the torque, and occurrence of a noise even in the case of a long-term use, and excellent short-term and long-term sliding characteristics. Therefore, a further improvement in the resin composition has been eagerly desired.

[ Summary of the Invention ]

The present inventors have made extensive and intensive studies with a view to developing a polyacetal resin composition capable of satisfying the above-described requirements and, as a result, have found that the use of a combination of a polyacetal resin with an inorganic powder having a particular particle diameter and a particular fatty acid ester enables the formation of a resin composition exhibiting very excellent performances as a sliding member, particularly as a material for a guide roller or a guide pole which slides on a metallic shaft or a running tape of VTR or 8 mm video.

Accordingly, the present invention relates to a polyacetal resin composition for a sliding member comprising:

(A) a polyacetal resin;

(B) 1 to 20% by weight (based on said composition) of an inorganic powder having an average particle diameter of 50 μm or less and such a particle diameter distribution that the proportion of particles having

a diameter of 100 μm or less is at least 95%; and

(C) 0.05 to 10% by weight (based on said composition) of a fatty acid ester comprising an ester of a fatty acid having 5 to 32 carbon atoms with a monohydric or polyhydric alcohol having 2 to 30 carbon atoms, and also relates to a molded article, such as a guide roller or a guide pole, made by using the same.

In the invention, a preferable composition of the invention includes calcium carbonate or silica for the component B and one selected from stearyl stearate, pentaerythritol monostearate, pentaerythritol tetrastearate and behenyl behanate for the component C. Stearyl stearate and pentaerythritol tetrastearate are more preferred.

The constitution of the present invention will now be described in detail.

First of all, the polyacetal resin as component (A) may be any of a polyacetal homopolymer and a polyacetal copolymer having a main chain mainly composed of an oxymethylene chain. Further, polyacetals modified by crosslinking or graft copolymerization according to a known method may be also used as the base resin and can exhibit the effect of the present invention. There is no particular limitation with respect to the degree of polymerization etc. as far as the molding of the resin is possible.

The inorganic powder as component (B) incorporated in the polyacetal resin as component (A) has an average particle diameter of 50 μm or less and such a particle diameter distribution that the proportion of particles having a diameter of 100 μm or less is at least 95%. It is preferred that the inorganic powder have an average particle diameter of 30 μm or less and such a particle diameter distribution that the proportion of particles having a diameter of 50 μm or less is at least 90%. It is particularly preferred that the inorganic powder have an average particle diameter of 10 μm or less.

An increase in the particle diameter of the inorganic powder brings about the formation of unevennesses on the surface of the molded article. This increases the surface roughness, which unfavourably brings about damage to a mating material for sliding, such as a type and a metallic shaft, and nonuniform rotation.

In the present invention, although there is no particular limitation with respect to the kind of the inorganic powder, preferable examples of the inorganic powder include calcium carbonate, magnesium carbonate, talc, silica, clay, kaolin, diatomaceous earth, pearlite, and bentonite, among which calcium carbonate, magnesium carbonate, talc, silica, and clay are particularly preferred.

The amount of addition of the inorganic powder as component (B) is 1 to 20% by weight (in the composition) based on the polyacetal resin as component (A). When the amount of addition is below this range, no synergistic effect can be attained in combination with component (C) which will be described later, and it is impossible to ensure sufficient workability in extrusion, molding, machining, etc. On the other hand, when the amount of addition exceeds the above-described range, there often occurs deterioration of the sliding property and damage to a mating material due to surface roughening of the molded article.

The fatty acid ester used as component (C) in the present invention is an ester of a fatty acid having 5 to 32 carbon atoms with a monohydric or polyhydric alcohol having 2 to 30 carbon atoms.

Examples of the fatty acid constituting the fatty acid ester include saturated fatty acids such as caproic acid, caprylic acid, undecylic acid, lauric acid, tridecylic acid, myristic acid, stearic acid, behenic acid, lignoceric acid, cerotic acid, montanic acid, and melissic acid; and unsaturated fatty acids such as oleic acid, elaidic acid, linolic acid, linolenic acid, arachidonic acid, brassidic acid, erucic acid, and ricinolic acid. Examples of the alcohol for forming the ester include monohydric alcohols such as propyl, isopropyl, butyl, octyl, capryl, lauryl, myristyl, stearyl, and behenyl alcohols; and polyhydric alcohols such as ethylene glycol, propylene glycol, butanediol, and glycerin. The ester is preferably an ester of a fatty acid having 12 to 22 carbon atoms with a monohydric or polyhydric alcohol having 2 to 22 carbon atoms, and examples thereof include an ester of the following fatty acid with the following alcohol:

fatty acid: lauric acid, myristic acid, palmitic acid, stearic acid, and behenic acid; and

alcohol: butyl alcohol, isopropyl alcohol, octyl alcohol, myristyl alcohol, stearyl alcohol, behenyl alcohol, ethylene glycol, propylene glycol, pentaerythritol, and glycerin.

Particularly preferable examples of the fatty acid ester include myristyl myristate, pentaerythritol monostearate, pentaerythritol tetrastearate, and behenyl behenate.

In the present invention, the amount of addition of the fatty acid ester is 0.05 to 10% by weight based on the composition. When the amount of addition is less than 0.05% by weight, no effect of improving the sliding property can be attained. On the other hand, when the amount of addition is more than 10% by weight, the property of polyacetal as the base material is remarkably spoiled. It is preferred that the fatty acid ester be incorporated in an amount of 0.1 to 5% by weight.

As described above, the feature of the present invention resides in that a combination of a specific inorganic powder as component (B) with a fatty acid ester, particularly the above-described specific fatty acid ester as component (C) is added and incorporated in the polyacetal resin as component (A).

In order to improve the sliding property, particularly the property of sliding on a high-speed tape or a metallic shaft, the addition of a fatty acid ester is more suitable than the addition of other lubricants. However, when the fatty acid ester is used alone, it is difficult to add the fatty acid ester homogeneously in an amount necessary for attaining an intended sliding property. This brings about problems during the kneading of the additive, such as slip of the resin on a screw of an extruder and occurrence of surging and vent-up of an unmolten resin through a vent hole, which makes it difficult to prepare a homogeneous composition. This further brings about problems during molding, such as insufficient grasp and insufficient plasticization, and problems during use, such as bleeding of a large amount of the lubricant on the surface of the molded article, so that it is impossible to sufficiently attain the object of the present invention, i.e., maintenance of the sliding property in a long-term use.

By contrast, the addition of a combination of a specific inorganic powder with a specific fatty acid ester according to the present invention can provide a composition suitable for guide roller and pole etc. which eliminates the drawback accompanying incorporation of the above-described fatty acid ester alone, remarkably improves the performance generally required of the sliding member, exhibits excellent effects also with respect to special sliding characteristics necessary for tape running parts of, e.g., VTR and 8 mm video, and machinability in the step of finishing the molded article into specified dimension and shape and, in particular, maintains excellent sliding characteristics even in the case of sliding for a long period of time.

The addition of an inorganic rigid material is detrimental to sliding properties such as wear and abrasion resistance. However, a particulate material having a particle diameter specified in the present invention, particularly a fine particulate material comprising calcium carbonate, magnesium carbonate, talc, clay, or silica is surprisingly free from such a drawback, and the combined use and coexistence with a fatty acid ester exhibit the above-described significant synergistic effect.

Known various stabilizers may be added to the composition of the present invention for the purpose of enhancing the stability. Further, known various additives may be incorporated in order to improve the physical properties according to the intended applications. Examples of the additives include various additives, lubricants, releasing agents, nulceating agents, antistatic agents, other surfactants, different kinds of polymers, and organic improvers.

Further, fibrous or flaky inorganic, organic, and metallic fillers and other particulate fillers may be used alone or in the form of a mixture of two or more of them in such an amount as will not remarkably spoil the performance of the composition according to the present invention.

When the composition of the present invention is used as tape running parts such as a guide roller or a guide pole, electrostatic charge tends to occur and may cause troubles in some cases. In this respect, it is particularly preferred to incorporate an antistatic agent.

The composition and molded article according to the present invention can be easily prepared by a known method commonly used in the art as a method of preparing a resin composition. For example, the composition and molded article according to the present invention can be prepared by, e.g., any of a method which comprises mixing individual components, integrally extruding the mixture with a single or twin screw extruder to prepare a pellet and molding the pellet, and a method which comprises preparing a pellet having a different composition (masterbatch), mixing (diluting) a predetermined amount of the pellet and subjecting the mixture to molding, thereby preparing a molded article having an intended composition after molding.

A method which is preferred from the viewpoint of improving the dispersibility of the additives comprises grinding part or the whole of the polyacetal resin as the base material, mixing the resultant powder with other components, and conducting extrusion etc.

A method which is preferred from the viewpoint of easily preparing the composition and improving the workability comprises preliminary mixing a fatty acid ester with an inorganic powder to impregnate the powder with the fatty acid ester, kneading the impregnated powder with a polyacetal resin and subjecting the mixture to extrusion or the like.

As is apparent from the foregoing description and Examples, the sliding member of the present invention comprising a polyacetal resin and, incorporated therein, a specific inorganic powder and a specific fatty acid ester not only exhibits wear and abrasion resistance remarkably improved over that in the case where the inorganic powder and the fatty acid ester are used alone, but also maintains excellent sliding characteristics even when used for a long period of time, i.e., the sliding member of the present invention is a very favorable one. Further, the sliding member composition of the present invention has been improved not only in the difficulties of extrusion and molding which have been problems accompanying this kind of conventional material but also in the drawbacks with repsect to separation and bleeding of the components. Further, occurrence of little or no noise during sliding is also one of the great advantages of the sliding member according to the present invention.

The sliding member composition of the present invention exhibits the above-described effects when used as a sliding member, which renders the composition of the present invention suitable for use in applications

under severe sliding conditions, e.g., as a guide roller, a guide pole, etc. for tape running of, e.g., VTR or 8 mm video, or also as various materials for sliding with, e.g., a metal, such as a bearing and a bush roller.

[ Brief Description of Drawing ]

Figs. 1(A) and (B) are respectively a side view and a plan view of a guide roller used in the evaluation of the machinability and the service test; and Fig. 2 is a plan view of a shaft similarly used in the evaluation of the machinability and the service test.

Figs. 3(A) and (B) are respectively a schematic cross-sectional view and a schematic plan view of a tester used in the service test for measurement of a current value as a measure of a change in the torque of a guide roller.

1...guide roller,
2...shaft,
3...rotary motor,
4...ammeter,
5...rotary plate (a metallic plate having rubber applied to the circumferential portion thereof),
6...spring,
P...contact load (100 g)

[Examples]

The present invention will now be described in more detail with reference to the following Examples which should not be construed as limiting the scope of the present invention.

Examples 1 to 12 and Comparative Examples 1 to 12

A polyacetal resin (Duracon M90; a product of Polyplastics Co., Ltd.) was mixed with an inorganic powder and a fatty acid ester in proportions shown in Tables 1 and 2. The mixture was melt-kneaded with a twin-screw extruder to pelletize a composition. A specimen was prepared from the pellet by injection molding and subjected to evaluation.

For comparison, evaluation was conducted with respect to a composition free from an inorganic powder, a composition containing an inorganic powder having a large particle diameter, a composition free from a fatty acid ester, a composition containing neither an inorganic powder nor a fatty acid ester, and a composition containing a lubricant other than a fatty acid ester. The results are shown in Tables 1 and 2.

The evaluation was conducted on the following items by the following method.

Extrudability (observation in pelletizing the composition):

Extrusion was conducted with a twin-screw extruder equipped with a vent having an inner diameter of 30 mm to observe the state of extrusion. The vent-up, foaming of a strand, surging phenomenon, etc. were observed with the naked eye and collectively evaluated in the five following ranks:

5 ——— 4 ——— 3 ——— 2 ——— 1

(good) free ←——— surging, vent-up, breaking of strand ———→ (poor) remarkable

Moldability:

Plasticization time was measured with a screw-type injection molding machine under conditions of a cylinder temperature of 190°C and the number of revolutions of screw of 120 r.p.m. A large value of the plasticization time means that the moldability is poor because of slip on the screw and poor grasp.

Machinability:

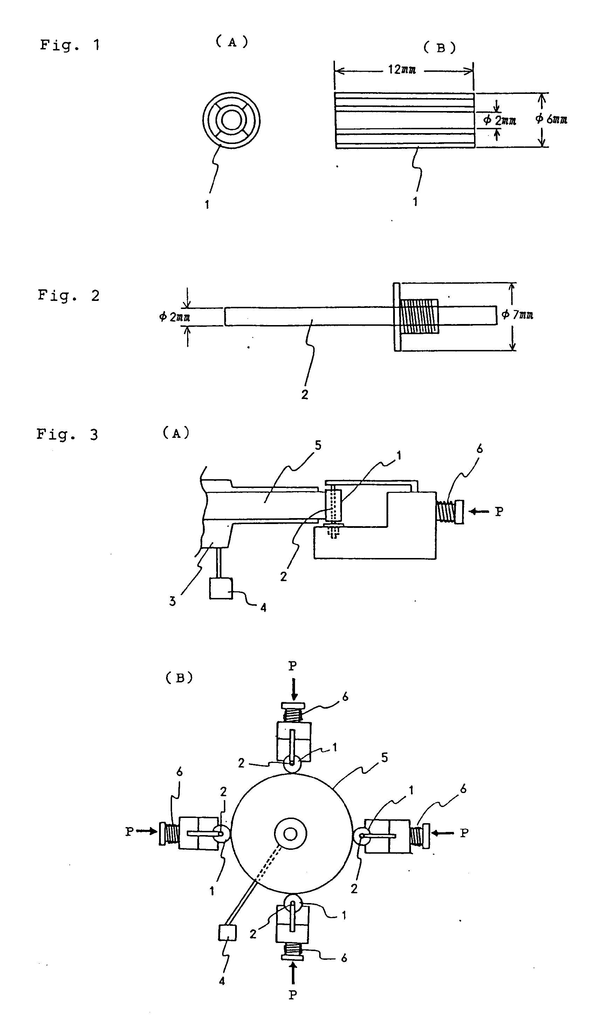

A guide roller shown in Fig. 1 was prepared and aged at 140°C for 3 hr. The sliding portion of the inside

of the guide roller was cut with a precision lathe, and the state of the internal surface thereof (burr and fuzzing) was observed under an electron microscope and evaluated in the five following ranks:

```
 5 ——————— 4 ——————— 3 ——————— 2 ——————— 1

(good)                                (poor)
free   <——————  burr     ——————>   remarkable
                fuzzing
```

Coefficient of friction and specific abrasion loss:

The coefficient of dynamic friction and specific abrasion loss were measured with a Suzuki wear and abrasion tester by making use of a metal (S55C) as a mating material under conditions of a pressure of 10 kg/cm$^2$, a linear velocity of 30 cm/sec, and a contact area of 2.0 cm$^2$.

Service test:

Sliding was conducted with respect to a shaft (metal) shown in Fig. 2 and a guide roller shown in Fig. 1 by making use of a tester shown in Fig. 3 under conditions of a contact load of 100 g, a rotating speed of 5500 r.p.m., and a sliding time of 48 hr to measure a motor load current value as a measure of a torque.

Further, the internal surface after sliding (seizure, flaw, etc. of the resin) was observed under an electron microscope and evaluated in the ten following ranks:

```
   10      <——————  5 (polyacetal    ——————>   1
excellent             Duracon M90)            poor
```

Further, the surface tackiness of the guide roller was observed before and after sliding.

Table 1

| | | | Ex. | | | | | | | Comp. Ex. | | | | | | |
|---|---|---|---|---|---|---|---|---|---|---|---|---|---|---|---|---|
| | | | 1 | 2 | 3 | 4 | 5 | 6 | 7 | 1 | 2 | 3 | 4 | 5 | 6 | 7 |
| Composition | (A) polyacetal resin | wt% | 97.8 | 94.5 | 94 | 92 | 80 | 94.5 | 94.5 | 100 | 95 | 99.5 | 96 | 99.5 | 99.5 | 94.5 |
| | (B) calcium carbonate*1 (average particle diameter: 3 μm) | wt% | 2 | 5 | 5 | 5 | 15 | 5 | 5 | — | 5 | — | — | — | — | 5 |
| | (C) stearyl stearate | wt% | 0.2 | 0.5 | 1 | 3 | 5 | — | — | — | — | 0.5 | 4 | — | — | — |
| | behenyl behenate | wt% | — | — | — | — | — | 0.5 | — | — | — | — | — | 0.5 | — | — |
| | pentaerythritol tetrastearate | wt% | — | — | — | — | — | — | 0.5 | — | — | — | — | — | 0.5 | — |
| | silicone oil | wt% | — | — | — | — | — | — | — | — | — | — | — | — | — | 0.5 |
| Quality | extrudability | — | 5 | 5 | 5 | 5 | 4 | 5 | 5 | 5 | 5 | 4 | 1 | 3 | 3 | 3 |
| | moldability | sec | 2.3 | 2.2 | 2.7 | 3.8 | 3.9 | 2.4 | 2.3 | 1.8 | 1.7 | 3.5 | —*2 | 3.8 | 3.9 | 3.3 |
| | machinability | — | 5 | 5 | 5 | 5 | 5 | 5 | 5 | 3 | 5 | 1 | — | 1 | 1 | 3 |
| | coefficient of dynamic friction | — | 0.20 | 0.17 | 0.16 | 0.16 | 0.20 | 0.18 | 0.18 | 0.37 | 0.35 | 0.22 | — | 0.25 | 0.23 | 0.22 |
| | specific abrasion loss | mm³/kg · km | 0.6 ×10⁻³ | 0.4 ×10⁻³ | 0.3 ×10⁻³ | 0.3 ×10⁻³ | 0.8 ×10⁻³ | 0.5 ×10⁻³ | 0.5 ×10⁻³ | 3.0 ×10⁻³ | 3.2 ×10⁻³ | 1.0 ×10⁻³ | — | 1.1 ×10⁻³ | 1.1 ×10⁻³ | 1.0 ×10⁻³ |
| | service test (i) torque (average value) | mA | 140 | 128 | 128 | 129 | 135 | 133 | 134 | 161 | 175 | 145 | — | 141 | 139 | 131 |
| | service test (i) torque (variation) | mA | 11 | 9 | 8 | 10 | 10 | 12 | 12 | 15 | 20 | 12 | — | 11 | 10 | 10 |
| | service test (ii) state of internal surface after sliding | — | 9 | 9 | 9 | 9 | 9 | 9 | 9 | 5 | 6 | 7 | — | 7 | 7 | 6 |
| | service test state of surface (tackiness) | — | free | free | free | free | free | free | free | free | free | slightly tacky | — | slightly tacky | slightly tacky | tacky |

*1 particles having a diameter of 50 μm or less: 99%<

*2 Molding could not be conducted because the composition could not be grasped by the molding machine.

Table 2

| | | | | Ex. | | | | | Comp. Ex. | | | | |
|---|---|---|---|---|---|---|---|---|---|---|---|---|---|
| | | | | 8 | 9 | 10 | 11 | 12 | 8 | 9 | 10 | 11 | 12 |
| Composition | (A) polyacetal resin | | wt% | 94.5 | 94.5 | 94.5 | 94.5 | 94.5 | 95 | 95 | 95 | 95 | 94.5 |
| | (B) calcium carbonate (average particle diameter: 20 μm)*1 | | wt% | 5 | — | — | — | — | 5 | — | — | — | — |
| | calcium carbonate (average particle diameter: 70 μm)*2 | | wt% | — | — | — | — | — | — | — | — | — | 5 |
| | talc (average particle diameter: 3 μm)*3 | | wt% | — | 5 | — | — | — | — | 5 | — | — | — |
| | silica (average particle diameter: 2 μm)*4 | | wt% | — | — | 5 | 5 | — | — | — | 5 | — | — |
| | clay (average particle diameter: 2 μm)*5 | | wt% | — | — | — | — | 5 | — | — | — | 5 | — |
| | (C) stearyl stearate | | wt% | 0.5 | 0.5 | 0.5 | — | 0.5 | — | — | — | — | 0.5 |
| | behenyl behenate | | wt% | — | — | — | 0.5 | — | — | — | — | — | — |
| Quality | extrudability | | — | 5 | 5 | 5 | 5 | 5 | 5 | 5 | 5 | 5 | 5 |
| | moldability | | sec | 2.5 | 2.2 | 2.3 | 2.4 | 2.4 | 1.8 | 1.9 | 1.7 | 1.8 | 2.5 |
| | machinability | | — | 5 | 5 | 5 | 5 | 5 | 5 | 5 | 5 | 5 | 5 |
| | coefficient of dynamic friction | | — | 0.19 | 0.18 | 0.17 | 0.17 | 0.18 | 0.35 | 0.36 | 0.34 | 0.35 | 0.30 |
| | specific abrasion loss | | $mm^3/kg\cdot km$ | $0.9\times10^{-2}$ | $0.5\times10^{-2}$ | $0.4\times10^{-2}$ | $0.4\times10^{-2}$ | $0.6\times10^{-2}$ | $3.8\times10^{-2}$ | $3.5\times10^{-2}$ | $3.3\times10^{-2}$ | $3.2\times10^{-2}$ | $2.8\times10^{-2}$ |
| | service test | (i) torque (average value) | mA | 141 | 138 | 135 | 134 | 137 | 180 | 178 | 168 | 174 | 170 |
| | | (variation) | mA | 14 | 13 | 13 | 9 | 10 | 20 | 20 | 18 | 17 | 30 |
| | | (ii) state of internal surface after sliding | — | 9 | 9 | 9 | 9 | 9 | 6 | 6 | 6 | 6 | 7 |
| | | state of surface (tackiness) | — | free | free | free | free | free | free | free | free | free | free |

*1 particles having a diameter of 100 μm or less: 98%< particles having a diameter of 50 μm or less: 95%

*2 particles having a diameter of 100 μm or less: 92%<

*3 particles having a diameter of 100 μm or less: 99%< particles having a diameter of 50 μm or less: 96%

*4 particles having a diameter of 100 μm or less: 99%< particles having a diameter of 50 μm or less: 97%

*5 particles having a diameter of 100 μm or less: 99%< particles having a diameter of 50 μm or less: 98%

## Claims

1. A polyacetal resin composition for a sliding member comprising:
(A) a polyacetal resin;
(B) 1 to 20% by weight (based on said composition) of an inorganic powder having an average particle diameter of 50 μm or less and such a particle diameter distribution that the proportion of particles having a diameter of 100 μm or less is at least 95%; and
(C) 0.05 to 10% by weight (based on said composition) of a fatty acid ester comprising an ester of a fatty acid having 5 to 32 carbon atoms with a monohydric or polyhydric alcohol having 2 to 30 carbon atoms.

2. A polyacetal resin composition for a sliding member according to claim 1, wherein said inorganic powder as component (B) is at least one member selected from the group consisting of calcium carbonate, magnesium carbonate, talc, clay, and silica.

3. A polyacetal resin composition according to claim 1 or claim 2, wherein said inorganic powder (B) has an average particle diameter of 30μm or less and such a particle diameter distribution that the proportion of particles having a diameter of 50μm or less is at least 90%.

4. A polyacetal resin composition according to claim 3, wherein said inorganic powder (B) has an average particle diameter of 10μm or less.

5. A polyacetal resin composition according to any preceding claim, wherein said fatty acid ester component (C) is an ester of a fatty acid having 12 to 22 carbon atoms with a monohydric or polyhydric alcohol having 2 to 22 carbon atoms.

6. A polyacetal resin composition according to claim 5, wherein said fatty acid ester component (C) is an ester of the following fatty acid with the following alcohol:
fatty acid: lauric acid, myristic acid, palmitic acid, stearic acid and behenic acid; and
alcohol: butyl alcohol, isopropyl alcohol, octyl alcohol, stearyl alcohol, behenyl alcohol, ethylene glycol, propylene glycol and pentaerythritol.

7. A polyacetal resin composition according to claim 6, wherein said fatty acid ester component (C) is selected from myristyl myristate, pentaerythritol monostearate, pentaerythritol tetrastearate and behenyl behenate.

8. A polyacetal resin composition according to any preceding claim, wherein said fatty acid ester component (C) is added in an amount of 0.1 to 5% by weight.

9. A polyacetal resin composition according to any preceding claim, which additionally incorporates an antistatic agent.

10. A guide roller or a guide pole, for use in a tape running system, made of a polyacetal resin composition according to any preceding claim.

## Patentansprüche

1. Polyacetalharz-Zusammensetzung für ein Gleitelement, umfassend:
(A) ein Polyacetalharz;
(B) 1 bis 20 Gew.-% (bezogen auf die Zusammensetzung) eines anorganischen Pulvers, dessen mittlerer Teilchendurchmesser 50 μm oder weniger beträgt und eine solche Teilchendurchmesser-Verteilung besitzt, daß der Anteil der Teilchen mit einem Durchmesser von 100 μm oder weniger, wenigstens 95% beträgt; und
(C) 0,05 bis 10 Gew.-% (bezogen auf die Zusammensetzung) eines Fettsäureesters, der einen Ester einer Fettsäure umfaßt, die 5 bis 32 Kohlenstoffatome hat, mit einem einwertigen oder mehrwertigen Alkohol, der 2 bis 30 Kohlenstoffatome hat.

2. Polyacetalharz-Zusammensetzung für ein Gleitelement, nach Anspruch 1, worin das anorganische Pulver

als Komponente (B) wenigstens einen Bestandteil darstellt, der aus der Gruppe Calciumcarbonat, Magnesiumcarbonat, Talkum, Tonerde und Silica auszuwählen ist.

3. Polyacetalharz-Zusammensetzung nach Anspruch 1, oder 2, worin das anorganische Pulver (B) einen mittleren Teilchendurchmesser von 30 µm oder weniger und eine solche Teilchendurchmesser-Verteilung besitzt, daß der Anteil der Teilchen mit einem Durchmesser von 50 µm oder weniger, wenigstens 90% beträgt.

4. Polyacetalharz-Zusammensetzung nach Anspruch 3, worin das anorganische Pulver (B) einen mittleren Teilchendurchmesser von 10 µm oder weniger besitzt.

5. Polyacetalharz-Zusammensetzung nach irgendeinem der vorangehenden Ansprüche, worin die Fettsäureester-Komponente (C) einen Ester einer Fettsäure darstellt, die 12 bis 22 Kohlenstoffatome hat, mit einem einwertigen oder mehrwertigen Alkohol, der 2 bis 22 Kohlenstoffatome besitzt.

6. Polyacetalharz-Zusammensetzung nach Anspruch 5, worin die Fettsäureester-Komponente (C) einen Ester der folgenden Fettsäure mit dem folgenden Alkohol darstellt:
Fettsäure: Laurinsäure, Myristinsäure, Palmitinsäure, Stearinsäure und Behensäure; und
Alkhol: Butylakohol, Isopropylalkohol, Octylalkohol, Stearylalkohol, Behenylalkohol, Ethylenglycol, Propylenglycol und Penta-Erytrit.

7. Polyacetalharz-Zusammensetzung nach Anspruch 6, worin die Fettsäureester-Komponente (C) aus Myristylmyristat, Penta-Erytrit-monostearat, Penta-Erytrit-tetrastearat und Behenylbehenat ausgewählt wird.

8. Polyacetalharz-Zusammensetzung nach irgendeinem der vorangehenden Ansprüche, worin die Fettsäureester-Komponente (C) in einer Menge von 0,1 bis 5 Gew.-% zugesetzt wird.

9. Polyacetalharz-Zusammensetzung nach irgendeinem der vorangehenden Ansprüche, die zusätzlich ein antistatisches Mittel enthält.

10. Führungswalze oder Führungsstange zur Verwendung in einem Bandlaufwerk, hergestellt aus einer Polyacetalharz-Zusammensetzung nach einem der vorangehenden Ansprüche.

## Revendications

1. Composition de résine polyacétal pour un élément glissant comprenant:
(A) une résine polyacétal;
(B) 1 à 20% en poids (par rapport à ladite composition) d'une poudre minérale ayant un diamètre moyen de particules de 50 µm ou moins et une distribution de diamètres des particules telle que la proportion de particules ayant un diamètre de 100 µm ou moins est d'au moins 95%; et
(C) 0,05 à 10% en poids (par rapport à ladite composition) d'un ester d'acide gras comprenant un ester d'un acide gras ayant 5 à 32 atomes de carbone avec un alcool monohydrique ou polyhydrique ayant 2 à 30 atomes de carbone.

2. Composition de résine polyacétal pour un élément glissant selon la revendication 1, dans laquelle ladite poudre minérale (B) est au moins un élément choisi dans le groupe constitué du carbonate de calcium, du carbonate de magnésium, du talc, de l'argile et de la silice.

3. Composition de résine polyacétal selon la revendication 1 ou 2, dans laquelle ladite poudre minérale (B) a un diamètre moyen de particules de 30 µm ou moins et une distribution de diamètres de particules telle que la proportion de particules ayant un diamètre de 50 µm ou moins est d'au moins 90%.

4. Composition de résine polyacétal selon la revendication 3, dans laquelle ladite poudre minérale (B) a un diamètre moyen de particules de 10 µm ou moins.

5. Composition de résine polyacétal selon l'une quelconque des revendications précédentes, dans laquelle ledit composant ester d'acide gras (C) est un ester d'un acide gras ayant 12 à 22 atomes de carbone avec un alcool monohydrique ou polyhydrique ayant 2 à 22 atomes de carbone.

6. Composition de résine polyacétal selon la revendication 5, dans laquelle ledit composant ester d'acide gras (C) est un ester de l'acide gras suivant avec l'alcool suivant:

| | |
|---|---|
| acide gras: | acide laurique, acide myristique, acide palmitique, acide stéarique et acide béhénique; et |
| alcool: | alcool butylique, alcool isopropylique, alcool octylique, alcool stéarylique, alcool béhénylique, éthylène glycol, propylène glycol et pentaérythritol. |

7. Composition de résine polyacétal selon la revendication 6, dans laquelle ledit composant ester d'acide gras (C) est choisi parmi le myristate de myristyle, le monostéarate de pentaérythritol, le tétrastéarate de pentaérythritol et le béhénate de béhényle.

8. Composition de résine polyacétal selon l'une quelconque des revendications précédentes, dans laquelle ledit composant ester d'acide gras (C) est ajouté à raison de 0,1 à 5% en poids.

9. Composition de résine polyacétal selon l'une quelconque des revendications précédentes, qui incorpore de plus un agent antistatique.

10. Rouleau de guidage ou broche de guidage, pour utilisation dans un système d'entraînement de bande, fabriqué en une composition de résine polyacétal selon l'une quelconque des revendications précédentes.

Fig. 1

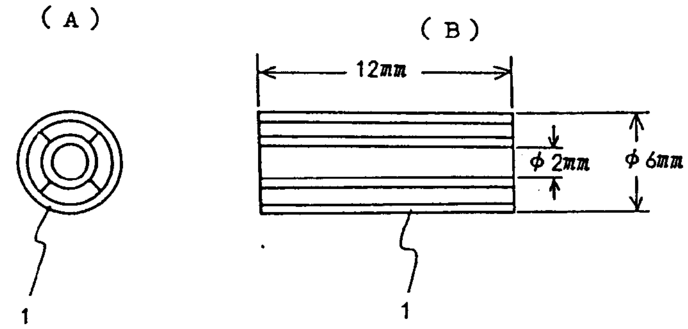


Fig. 2

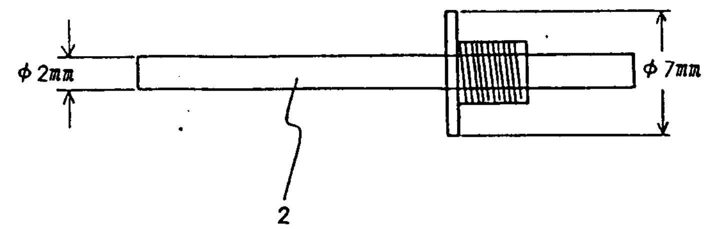


Fig. 3